# EUROPEAN PATENT APPLICATION

(11) **EP 3 330 659 A1**
(43) Date of publication of application: **06.06.2018**
(21) Application number: 16830643.9
(22) Date of filing: 22.07.2016
(51) Int. Cl.: F28F 9/02, B23K 1/00, F28D 1/053, B23K 101/14

(54) **HEAT EXCHANGER HEADER TANK**

(30) Priority: 28.07.2015 JP 2015148698
(71) Applicant: T.RAD Co., Ltd., Shibuya-ku Tokyo 151-0053 (JP)
(72) Inventor: TAKASE, Masaaki, Tokyo 151-0053 (JP)
(74) Representative: Addiss, John William
(86) International application number: PCT/JP2016/072459
(87) International publication number: WO 2017/018540

(57) **Abstract**

In a heat exchanger header tank including a header plate 3 through which end portions of a number of flat tubes 2 placed in parallel are inserted, and a header body 4 fitted to the header plate 3, the header plate 3 and the header body 4 are temporarily assembled easily and accurately, and joined more accurately by brazing.

The header body 4 is formed in a gutter-like shape, and positioned with both ends thereof on an opening side in contact with both ends of a major axis on an opening end surface 2a of each flat tube 2 inserted into the header plate 3.

## Description

### Technical Field

The present invention relates to a heat exchanger header tank in which a header plate and a header body are joined by brazing.

### Background Art

A heat exchanger header tank described in the Patent Literature 1 described below, as illustrated in Fig. 5, is obtained by performing brazing between a header plate 23 and a header body 24.

The header plate 23 is formed by bending and folding in a U-letter shape a flat plate through which a number of tube insertion holes 21 are drilled. Further, on its opening end portion, a flat step opening portion 25 is formed. Subsequently, the header body 24 is formed by bending and folding the flat plate into an inverted U-letter shape.

Then, the step opening portion 25 of the header plate 23 is covered to be fitted by the header body 24, and brazing is integrally performed between respective components.

### Citation List

### Patent Literature

PTL 1: Japanese Patent Laid-Open No. 3-36497

### Summary of Invention

### Technical Problem

However, according to the invention described in the Patent Literature 1 in the foregoing, it is difficult to form the accurate step opening portion 25 on an opening end of the header plate 23 along a longitudinal direction. In addition, it is also difficult to form in a flat shape both ends of the header body 24 aligning with the opening portion 25. Further, even though the header body 24 and the header plate 23 are formed in a U-letter shape by molding process, the step portion is deformed by spring back after the molding process. Thus, it is difficult to accurately maintain a joining surface between the header plate 23 and the header body 24.

Therefore, according to the invention described in the Patent Literature 1, when, before brazing, the header plate 23 and the header body 24 are positioned by accurately engaging with each other and temporarily fixed, engaging portions need to be processed with extremely high accuracy, and many dimensions need to be under control. Therefore, process cost is high and the examination and management of the dimensions are troublesome. Furthermore, when the header plate 23 and the header body 24 are positioned not by accurate engagement but by jigs and are temporarily fixed, the special jigs are necessary. Therefore, the production cost of the jigs is high, and adjustment of the jigs to be mounted is troublesome.

Accordingly, it is an object of the present invention to facilitate the temporary fixing between the header plate 23 and the header body 24 before performing the brazing and improve productivity, thereby cutting the production cost.

### Solution to Problem

The present invention according to claim 1 is a heat exchanger header tank including: a header plate 3 configured to have a number of tube insertion holes 1 placed in parallel to be separated in a longitudinal direction and an end portion of a flat tube 2 that is inserted into each insertion hole 1 with an opening thereof placed in parallel in a width direction; and a header body 4 configured to be fitted to the header plate 3, in which a fit portion therebetween is brazed with each other, wherein
the header body 4 is formed in a gutter-like shape, and positioned with both ends on an opening side thereof in contact with both ends of a major axis on an opening end surface 2a of each flat tube 2 inserted into the header plate 3.

The present invention according to claim 2 is the heat exchanger header tank according to claim 1, in which
the header body 4 has a gutter-like shape whose cross-sectional surface perpendicular to an axial line (0) is formed in a circular arc shape,
the header plate 3 includes an arc-shaped portion 5 whose inner circumference surface substantially aligns with an outer circumference of the header body 4, and a pair of flange portions 6 integrally protruding from the both ends outwardly, and
in a state where the header body 4 is fitted to the header plate 3, brazing is performed between the header body 4 and the header plate 3.

The present invention according to claim 3 is the heat exchanger header tank according to claim 2, in which
the flange portion 6 includes one high flange portion 6a arranged with a height from the opening end surface 2a of the flat tube 2 to the flange portion 6 higher than that of another flange portion 6, and other low flange portion 6b,
a plurality of the header tanks is placed in parallel and,
on adjacent header plates 3 thereof, an end of the low flange portion 6b of one header plate 3 is abutted on a near outer circumferential surface of the high flange portion 6a of the other header plate 3.

### Advantageous Effects of Invention

In the heat exchanger header tank of the present invention, the header body 4 is formed in a gutter-like shape, and positioned with its both ends on an opening side in contact with both ends of a major axis on an opening end surface 2a of each flat tube 2 inserted into the header plate 3.

With this configuration, the header body 4 can be simply and easily positioned and supported.

As the invention according to claim 2, in addition to the above-described configuration, when the header body 4 is formed in the gutter-like shape whose cross-sectional surface perpendicular to the axial line 0 has a circular arc shape, and when the header plate 3 includes the arc-shaped portion 5 substantially aligning with an outer circumference of the header body 4, and a pair of flange portions 6 integrally protruding outwardly from the both ends of the arc-shaped portion 5, the header body 4 is smoothly led to the header plate 3. In addition, the header plate 3 is improved in its bending rigidity and distortion rigidity. With this arrangement, treatment of the header plate 3 is facilitated in temporary assembling. In addition, since the distortion of the header plate 3 is prevented, the header tank can be temporarily assembled easily and accurately.

As the invention according to claim 3, in addition to the above-described configuration, on adjacent header plates 3, when an end of a low flange portion 6b of one header plate 3 is abutted on a near outer circumferential surface of a high flange portion 6a of the other header plate 3, displacement of the one header plate 3 in the parallel direction is mutually restricted by the other header plate 3. Accordingly, for the header tanks placed in parallel, only the header plates at both ends in the parallel direction are pressurized in the mutual closer direction thereof. Thus, a fitting portion between the header plate 3 and the header body 4 in all the header tanks placed in parallel can be tightly pressed, and the header tanks can be temporarily assembled easily.

Further, since the adjacent flanges do not interfere with each other, a width of each flange can be set large. Consequently, the header plate 3 is improved in its bending rigidity and distortion rigidity to facilitate treatment of the header plate 3 in the temporary assembling. In addition, since the distortion of the header plate 3 is prevented, the header tanks can be temporarily assembled easily and accurately.

### Brief Description of Drawings

Fig. 1 is a cross-sectional view of an essential part illustrating a heat exchanger header tank of the present invention.
Fig. 2 is an exploded perspective view of the heat exchanger header tank.
Fig. 3 is a cross-sectional view of an essential part of a heat exchanger header tank according to Example 2 of the present invention, and an explanatory diagram illustrating a production method thereof.
Fig. 4 is a cross-sectional view of an essential part of a heat exchanger header tank according to Example 3 of the present invention, and an explanatory diagram illustrating a production method thereof.

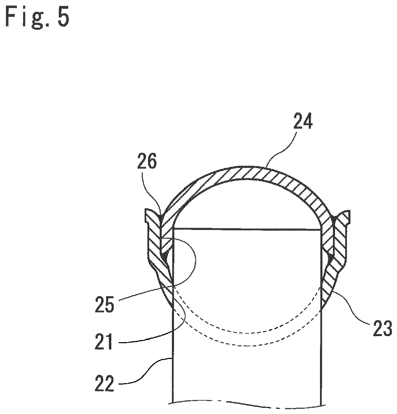

Fig. 5 is a cross-sectional view of an essential part of a conventional heat exchanger header tank.

### Description of Embodiments

Subsequently, embodiments of the present invention will be described on the basis of the figures.

### Example 1

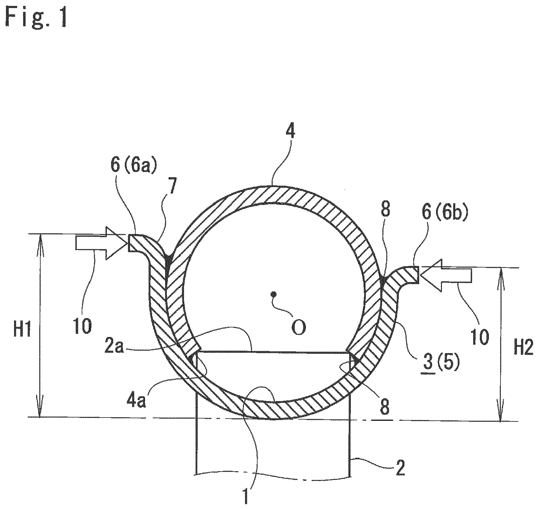

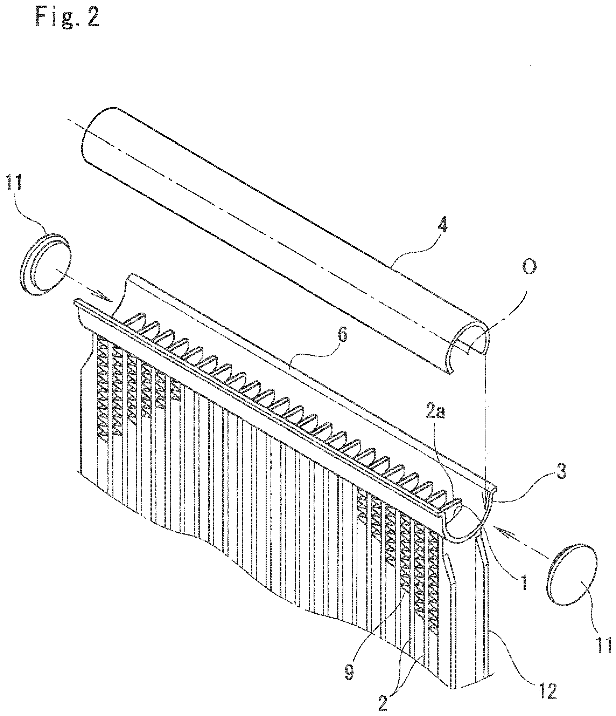

Fig. 1 is a cross-sectional view of an essential part of a heat exchanger header tank according to Example 1 of the present invention. Fig. 2 is an exploded perspective view of the heat exchanger header tank. In this example, only the header tank on an upper portion side of the upper and lower tanks is described, and the header tank on a lower portion side is omitted.

As illustrated in Figs. 1 and 2, in the heat exchanger, fins 9 and flat tubes 2 are alternately placed in parallel with each other to form a core. At both ends of the core in a parallel direction, a pair of side members 12 are arranged. Then, both ends of each flat tube 2 are inserted into a tube insertion hole 1 of a header plate 3, a header body 4 is fitted to the header plate 3, and further, a pair of end caps 11 are arranged on the both ends of the header plate 3.

In the header plate 3, the tube insertion holes 1 are placed in parallel with each other with a predetermined space. Major axes of openings of the flat tubes 2 inserted into the tube insertion holes 1 are located in parallel with each other in a width direction of the header plate 3. Note that each flat tube 2 is inserted such that distances (insertion lengths) from a bottom portion of the header plate 3 to an opening end surface 2a of each flat tube 2 are substantially the same.

Subsequently, the header body 4 is formed such that a cross-sectional surface of the header body 4 has a circular arc shape. A center angle of the circular arc portion is formed to be larger than 180 degrees.

Then, an inner circumference of the header plate 3 substantially aligns with an outer circumference of the header body 4. In addition, as illustrated in Fig. 1, a length of the inner circumference of the header plate 3 includes the circular arc portion whose center angle is larger than 180 degrees. A pair of flange portions 6 are outwardly protruded on the both ends of the circular arc via a curved surface 7.

In the header plate 3, as illustrated in Fig. 1, a height HI of the flange portion 6 on a left side is formed higher than a height H2 of the flange portion 6 on a right side. A high flange portion 6a and a low flange portion 6b are individually formed on the left side and the right side.

Such a header plate 3 can be formed as described below, as an example.

A number of the tube insertion holes 1 are drilled with an equal space on a metal plate. At this time, the tube insertion holes 1 are respectively drilled at positions closer to one side over an entire width of the header plate 3. Subsequently, in addition to bending and folding the header plate 3 into a circle, the pair of flange portions 6 are formed via the curved surface 7 at the both ends of the header plate 3, and formed in the gutter shape including flange portions at the both ends as a whole.

Subsequently, the header body 4 is formed by bending and folding the metal plate such that the cross-sectional surface of the metal plate has the circular arc shape and the outer circumference of the header body 4 substantially aligns with the inner circumference of the header plate 3.

### (Assembly Method)

The flat tube 2 and the fin 9 are alternately placed in parallel with each other to form the core. At both ends of the core, side members 12 are arranged. Then, in a state of tightly pressing the entire core by the jig, each flat tube 2 is simultaneously inserted into the insertion holes 1 of the header plate 3. At this time, the respective flat tubes 2 are arranged such that the opening end surfaces 2a of leading ends thereof are aligned on the same flat surface.

Subsequently, the header body 4 is fitted into the header plate 3. At this time, since the curved surface 7 is formed on the pair of flange portions 6, the header body 4 is smoothly led into the header plate 3 along the curved surface 7. Both ends 4a of the header body 4 are abutted on the both ends of the opening end surface 2a of the flat tube 2 in a major axis direction and the header body 4 is positioned.

In this state, as illustrated in Fig. 1, pressurizing force 10 is applied to press a part between the end surfaces of the pair of flange portions 6 so as to adhere the inner circumference of the header plate 3 to the outer circumference of the header body 4. To apply a pair of the pressurizing force 10, at the outer circumference of the header plate 3, an appropriate tightening jig (not illustrated) is mounted to tighten the outer circumference thereof so that the space between the header plate 3 and the header body 4 is tightened to maintain the adhering state therebetween.

Note that brazing material covers a surface of at least one of the respective components in contact with each other, or is attached in advance. Then, the heat exchanger assembled in a state illustrated in Fig. 1 is inserted in a furnace at a high temperature, and the brazing material on the surface is melted. By cooling the brazing material, brazing is integrally performed among the respective components.

Note that, regarding the above-described assembly, the header body 4 can be inserted from an axial line 0 direction of the header plate 3.

Then, after the header body 4 is fitted to the header plate 3, a pair of end caps 11 are arranged at both ends thereof. Another jig (not illustrated) tightens a part between both the end caps 11. Further, another jig also tightens a part between a pair of side members 12.

### Example 2

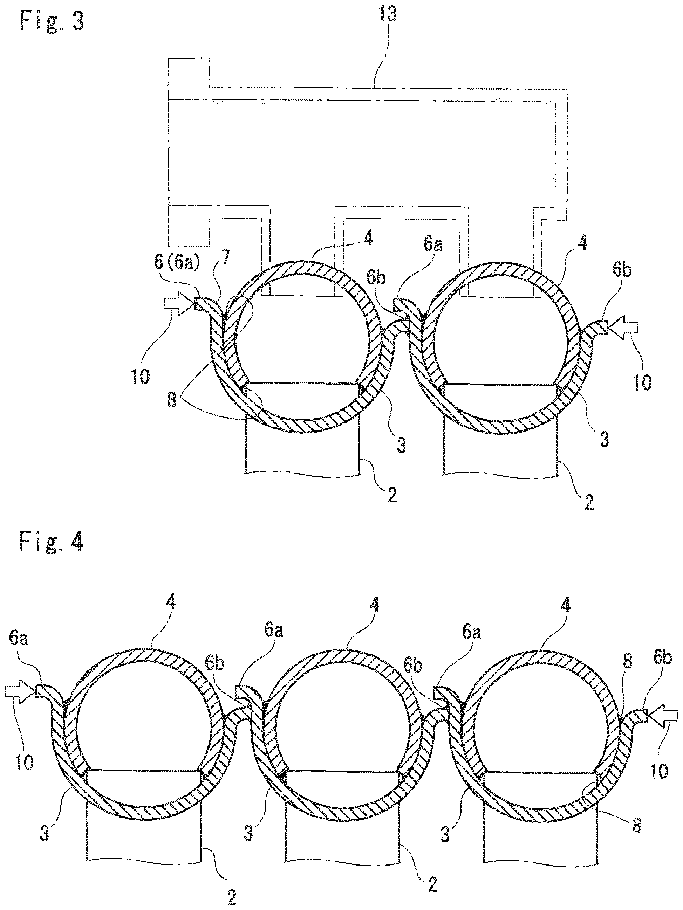

Subsequently, Fig. 3 illustrates a heat exchanger according to Example 2 of the present invention. In this example, two header tanks are placed in parallel.

At this time, an end surface of the low flange portion 6b of the header plate 3 on the left side in the figure is located lower than the high flange portion 6a of the header plate 3 on the right side therein, thus coming into contact with each other.

Note that the header body 4 is fitted into each header plate 3 by the similar procedure. In the state, the pressurizing force 10 is applied by a tightening jig (not illustrated) between the end surface of the high flange portion 6a of the header plate 3 on the left side and the end surface of the low flange portion 6b of the header plate 3 on the right side.

Accordingly, for the header tanks placed in parallel, only the header plates at both ends in the parallel direction are pressurized in a mutual closer direction of the header plates, so that the fitting portions between the header plate and the header body in all the header tanks placed in parallel can be tightly pressed. Thus, the header tank can be temporarily assembled easily.

### Example 3

Subsequently, Fig. 4 illustrates a heat exchanger according to Example 3 of the present invention. A point of this example different from Example 2 in Fig. 3 is that three heat exchangers are placed in parallel.

At this time, in the figure, the pressurizing force 10 is applied between the high flange portion 6a of the header plate 3 located at the leftmost end, and the low flange portion 6b of the header plate 3 located at the rightmost end.

As a consequence, for the three header tanks placed in parallel, only the header plates at both the ends in the parallel direction are pressurized in a mutual closer direction of the header plates, so that the fitting portions between the header plate and the header body in all the three header tanks placed in parallel can be tightly pressed. Thus, the header tank can be temporarily assembled easily.

Note that, when a plurality of the heat exchangers is placed in parallel as Example 2 and Example 3, the distribution header 13 is mounted as illustrated in Fig. 3 so that fluid can flow in each tank.

### Industrial Applicability

The present invention can be used for the heat exchanger including a number of tubes, a heater plate, and a header body, for example, an oil cooler, radiator, capacitor, and others.

### Reference Signs List

- 1: tube insertion hole
- 2: flat tube
- 2a: opening end surface
- 3: header plate
- 4: header body
- 4a: end
- 5: arc-shaped portion
- 6: flange portion
- 6a: high flange portion
- 6b: low flange portion
- 7: curved surface
- 8: brazed fillet
- 9: fin
- 10: pressurizing force
- 11: end cap
- 12: side member
- 13: distribution header
- 0: axial line
- 21: tube insertion hole
- 22: flat tube
- 23: header plate
- 24: header body
- 25: step opening portion
- 26: brazed fillet

## Claims

1. A heat exchanger header tank comprising: a header plate (3) configured to have a number of tube insertion holes (1) placed in parallel to be separated in a longitudinal direction and an end portion of a flat tube (2) that is inserted into each insertion hole (1) with an opening thereof placed in parallel in a width direction; and a header body (4) configured to be fitted to the header plate (3), in which a fit portion therebetween is brazed with each other, wherein
the header body (4) is formed in a gutter-like shape, and positioned with both ends on an opening side thereof in contact with both ends of a major axis on an opening end surface (2a) of each flat tube (2) inserted into the header plate (3).

2. The heat exchanger header tank according to claim 1, wherein the header body (4) has a gutter-like shape whose cross-sectional surface perpendicular to an axial line (0) is formed in a circular arc shape,
the header plate (3) includes an arc-shaped portion (5) whose inner circumference surface substantially aligns with an outer circumference of the header body (4), and a pair of flange portions (6) integrally protruding from the both ends outwardly, and
in a state where the header body (4) is fitted to the header plate (3), brazing is performed between the header body (4) and the header plate (3).

3. The heat exchanger header tank according to claim 2, wherein
the flange portion (6) includes one high flange portion (6a) arranged with a height from the opening end surface (2a) of the flat tube (2) to the flange portion (6) higher than that of another flange portion (6), and other low flange portion (6b),
a plurality of the header tanks is placed in parallel, and
on adjacent header plates (3) thereof, an end of the low flange portion (6b) of one header plate (3) is abutted on a near outer circumferential surface of the high flange portion (6a) of the other header plate (3).
